(19) Europäisches Patentamt
European Patent Office
Office européen des brevets

(11) EP 3 974 162 A1

(12) **EUROPÄISCHE PATENTANMELDUNG**

(43) Veröffentlichungstag:
**30.03.2022 Patentblatt 2022/13**

(21) Anmeldenummer: **21198507.2**

(22) Anmeldetag: **23.09.2021**

(51) Internationale Patentklassifikation (IPC):
**B29C 70/20** (2006.01)   **B29C 70/22** (2006.01)
**B60B 5/02** (2006.01)   **B29C 70/30** (2006.01)
**B29C 70/54** (2006.01)   **B29C 70/48** (2006.01)
**B29L 31/32** (2006.01)

(52) Gemeinsame Patentklassifikation (CPC):
**B29C 70/202; B29C 70/226; B29C 70/30;**
**B29C 70/302; B29C 70/543; B60B 5/02;**
B29C 70/48; B29L 2031/32; B60B 2360/341

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **29.09.2020 DE 102020125459**

(71) Anmelder: **Munich Composites GmbH**
**85640 Putzbrunn (DE)**

(72) Erfinder: **RÜGER, Olaf**
**83052 Bruckmühl (DE)**

(74) Vertreter: **Winter, Brandl - Partnerschaft mbB**
**Alois-Steinecker-Straße 22**
**85354 Freising (DE)**

(54) **FAHRZEUGFELGE MIT UMGEKREMPELTEN ENDSEITIGEN NCF-SUBPREFORMS UND VERFAHREN ZU DEREN HERSTELLUNG**

(57) Die Erfindung betrifft eine Fahrzeugfelge (1) mit einem Felgenkörper (2) aus Faserverbundmaterial, aufweisend ein erstes Subpreform (3) an einem ersten axialen Ende und ein drittes Subpreform (5) an dem gegenüberliegenden zweiten axialen Ende, wobei ein zweiter Subpreform (4) zwischen dem ersten Subpreform (3) und dem dritten Subpreform (5) angeordnet ist, wobei der zweite Subpreform (4) sowohl in einen durch den ersten Subpreform (3) ausgebildeten vorderen Verbindungshohlraum (6) eingreift als auch in einen durch den dritten Subpreform (5) ausgebildeten hinteren Verbindungshohlraum (7) eingreift, und wobei der erste Subpreform (3) und der zweite Subpreform (4) und der dritte Subpreform (5) ein NCF-Material (19) aufweisen. Die Erfindung betrifft auch ein Verfahren zum Herstellen einer Fahrzeugfelge (1) mit einem Felgenkörper (2) aus Faserverbundmaterial, wobei jeweils ein kohlefaser-, glasfaser- und/oder aramidfaserumfassendes NCF-Material (19) zum Ausbilden einer ersten Subpreform (3) für ein erstes axiales Ende des Felgenkörpers (2) und einer dritten Subpreform (5) für ein gegenüberliegendes axiales zweites Ende des Felgenkörpers (2) mit jeweils einem Verbindungshohlraum (6, 7) geschaffen wird, und dass ein zweites Subpreform (4) aus einem gleichen oder ähnlichen NCF-Material (19) in die Verbindungshohlräume (6, 7) eingesetzt und dort befestigt wird.

Fig. 1

EP 3 974 162 A1

**Beschreibung**

Die Erfindung betrifft eine Fahrzeugfelge mit einem üblicherweise hohlen, vorzugsweise (rotations-)symmetrischen Felgenkörper aus Faserverbundmaterial.

Aus dem Stand der Technik sind grundsätzlich Fahrzeugfelgen mit einem Felgenkörper aus Faserverbundmaterial bekannt. Diese Felgenkörper weisen üblicherweise Gewebe, Gelege oder Geflechte aufweisend Kohlefasern, Glasfasern oder Aramidfasern, vorgetränkt oder später injiziert mit Harz auf. Nach einem Aushärten, wird eine Fahrzeugfelge, aufweisend diesen Felgenkörper, zur Verfügung gestellt.

Es ist auch bekannt, dass der aus Faserverbundmaterial gefertigte Felgenkörper mit einem weiteren Bauteil verbunden werden kann, das zur Befestigung an der Radnabe eines Fahrzeugs, wie eines Pkws, eines Lkws oder eines anderen Nutzfahrzeuges, aber auch von bspw. motorgetriebenen Zweirädern, vorgesehen ist. Oftmals ist dieses Bauteil als Stern ausgebildet und üblicherweise aus Metall bzw. einer Metalllegierung, wie einer Aluminiumlegierung.

Bisher ist es jedoch sehr aufwändig und kostenintensiv die besagten (CFK-)Felgenkörper herzustellen. Auch sind solche Felgenkörper bisher nicht so hoch belastbar, wie gewünscht. Insbesondere thermische Belastungen, Drücke, aber auch Zentripetalkräfte müssen noch besser ertragen werden. Auch soll ein solcher Felgenkörper extrem steif und leicht sein.

Diese Aufgabe wird bei einer Fahrzeugfelge mit den Merkmalen des Anspruchs 1 gelöst, nämlich durch eine Fahrzeugfelge mit einem üblicherweise hohlen, vorzugsweise (rotations-)symmetrischen Felgenkörper aus Faserverbundmaterial, aufweisend einen ersten Subpreform an einem ersten axialen Ende und einen dritten Subpreform an dem gegenüberliegenden zweiten axialen Ende, wobei ein zweiter Subpreform zwischen dem ersten Subpreform und dem dritten Subpreform angeordnet ist, wobei der zweite Subpreform sowohl in einen durch den / in dem ersten Subpreform ausgebildeten / vorhandenen vorderen Verbindungshohlraum eingreift als auch in einen durch den / in dem dritten Subpreform ausgebildeten / vorhandenen hinteren Verbindungshohlraum eingreift. Der erste Subpreform und der zweite Subpreform und der dritte Subpreform weisen ein NCF-Material auf, sind weiter bevorzugt gar überwiegend / vollständig daraus aufgebaut.

Aufgrund der Möglichkeiten drei unterschiedliche Sub-Preforms zu nutzen, können die Arbeitsschritte parallel ablaufen, wodurch Zeit gespart wird. Auch ermöglicht eine solche Fahrzeugfelge ein kontinuierliches Fertigungsverfahren, genauso wie ein diskontinuierliches Fertigungsverfahren. Die so geschaffenen Felgenkörper sind besonders leicht, steif und belastbar.

Die Erfindung hat sich auch zur Aufgabe gesetzt, ein besonders schnelles, kostenintensives und verlässliches, d. h. ausfallabgesichertes Verfahren zur Herstellung einer Fahrzeugfelge mit einem Felgenkörper aus Faserverbundmaterial zur Verfügung zu stellen.

Diese Aufgabe wird erfindungsgemäß mit einem Verfahren aufweisend die Merkmale des Anspruchs 10 gelöst.

Ein solches Verfahren zum Herstellen einer Fahrzeugfelge mit einem Felgenkörper aus Faserverbundmaterial ist dadurch gekennzeichnet, dass jeweils ein kohlefaser-, glasfaser- und/oder aramidfaserumfassendes NCF (non-crimp fabric / Gelege) zum Ausbilden eines ersten Subpreform für ein erstes axiales Ende des Felgenkörpers, eines dritten Subpreform für das gegenüberliegende axiale Ende des Felgenkörpers mit jeweils einem Verbindungshohlraum geschaffen wird, in das ein zweiter Subpreform aus einem gleichen oder ähnlichen NCF-Material in den Verbindungshohlraum eingesetzt und dort befestigt wird, etwa mittels Aktivierung eines (vorzugsweise thermischen) Binders und/oder eines Einbringens einer (3D-)Naht.

Vorteilhafte Weiterbildungen der Fahrzeugfelge sind in den Unteransprüchen beansprucht. Vorteilhafte Weiterbildungen des Verfahrens sind ebenfalls in den Unteransprüchen beansprucht. Diese vorteilhaften Weiterbildungen werden nachfolgend näher erläutert.

So ist es von Vorteil, wenn der zweite Subpreform in den beiden Verbindungshohlräumen an dem ersten Subpreform und dem dritten Subpreform insbesondere einstückig / integral befestigt / angebracht ist. Eine gute Dauerhaltbarkeit ist dann gewährleistet.

Wenn alle drei Subpreforms durch dasselbe Harz / Harzgemisch durchsetzt sind, so wird ein zusammenhängendes, steifes, aber besonders leichtes Bauteil möglich.

Unter einem NCF / NCF-Material wird ein "non-crimp fabric" verstanden. Dies ist ein Flächengebilde, das aus einer oder mehreren Lagen von parallel verlaufenden gestreckten Fäden besteht. An den Kreuzungspunkten werden die Fäden üblicherweise fixiert. Die Fixierung erfolgt entweder durch Stoffschluss oder mechanisch durch Reibung und/oder Formschluss.

Es existieren folgende Arten von Fadengelegen:

- monoaxiale oder unidirektionale Fadengelege, die durch das Fixieren einer Schar von parallelen Fäden entstehen;
- biaxiale Fadengelege, bei denen zwei Scharen von parallelen Fäden in Richtung von zwei Achsen fixiert werden;
- multiaxiale Fadengelege, wobei mehrere Scharen aus parallelen Fäden in Richtung verschiedener Achsen fixiert werden.

Die Fadenlagen bei mehrlagigen Gelegen können alle unterschiedliche Orientierung aufweisen, auch aus unterschiedlichen Fadendichten und unterschiedlichen Fadenfeinheiten bestehen. Im Vergleich zu Geweben haben Gelege als Verstärkungsstrukturen bekanntermaßen in Faser-Kunststoff-Verbunden, wobei dies das grundsätzliche technische Gebiet ist, auf dem die Erfindung angeordnet ist, bessere mechanische Eigenschaften, da die Fäden in gestreckter Form vorliegen und damit keine zusätzliche Strukturdehnung vorliegt und die Ausrichtung der Fäden speziell für den jeweiligen Anwendungsfall definiert werden kann.

Um besonders hochbelastbare Felgen mit entsprechendem Felgenkörper herstellen zu können, hat es sich bewährt, wenn das NCF ein monoaxiales / unidirektionales, oder biaxiales (z. B. +/- 45°-Fasern enthaltendes) oder multiaxiales Gelege, vorzugsweise aus Kohlefasern, Glasfasern oder Aramidfasern ist.

Besonders hohe Kräfte bei niedrigem Gewicht lassen sich durch den Felgenkörper dann aufnehmen, wenn der erste Subpreform und/oder der zweite Subpreform und/oder der dritte Subpreform mehrere, bspw. 3, 4, 5, 6, 7, 8 oder mehr Lagen aus NCF besitzt / besitzen, wobei vorzugsweise der erste Subpreform und der dritte Subpreform gleich viele oder ungleich viele Lagen besitzen und der zweite Subpreform unterschiedlich viele Lagen, vorzugsweise mehr Lagen relativ als der erste Subpreform und/oder der dritte Subpreform besitzt. Gerade diese unterschiedliche Lagenverteilung wirkt sich auch positiv auf das spätere Fahrverhalten des die Fahrzeugfelge einsetzenden Fahrzeugs aus. Die Anpassung der Lagen und Anzahl bei jeder Preform erhöht die Optimierungsmöglichkeiten und somit das Leichtbaupotential. Es muss aber nicht unterschiedlich sein.

Es ist zweckmäßig, wenn der erste Subpreform und/oder der dritte Subpreform ein NCF besitzt, auf dem ein Roving-Bündel befestigt ist, wobei bspw. dieses Kombinat vorzugsweise mehrlagig aufgewickelt ist. Durch das Einsetzen eines Roving-Bündels lässt sich die spätere Felgenflanke besser herausarbeiten. Die dort auftretenden hohen Zugkräfte lassen sich dann gut auffangen.

Unter "Rovings" werden Faserfilamente, insbesondere Chemiefaser-Filamente verstanden. Als "Roving" wird hier ein Bündel, Strang oder Multifilamentgarn aus parallel angeordneten Filamenten / Endlosfasern verstanden. Der Querschnitt eines "Rovings" ist häufig elliptisch oder rechteckig. Solche Rovings, die eine leichte Schutzdrehung, bspw. fünf oder zehn Drehungen pro Meter aufweisen, sollen hier mit umfasst sein, wodurch der Querschnitt runder wird. Insbesondere solche Filamente aus Glas, Aramid oder Kohlenstoff bilden dabei einen Roving.

Wenn das Roving-Bündel mehrere, bspw. 3, 4, 5, 6, 7, 8, 9, 10, 11, 12, 13, 14, 15 oder mehr Rovings beinhaltet, die vorzugsweise miteinander verdrillt sind, bspw. 5, 6 7, 8, 9 oder 10 Umdrehungen pro Meter +/- 2 bis 3 oder parallel zueinander verlaufen und/oder von einem Positionierungsfaden, wie einem Glasfaserfaden oder einem Kohlefaserfaden umwunden sind, so bringt schon das Roving-Bündel selber eine hervorragende Steifigkeit sowohl für die Verarbeitung, als auch für die spätere Verwendung des gesamten Felgenkörpers mit.

Damit die Fertigung zügig vonstattengehen kann und auf eine maschinelle Fertigung gesetzt werden kann, ist es von Vorteil, wenn das Roving-Bündel auf dem NCF aufgenäht ist, bspw. mittels einer der Längsrichtung des Roving-Bündels und dem NCF folgenden Zickzack-Naht. Dabei hat es sich bewährt, wenn eine Richtungsänderung des Fadens der Zickzack-Naht alle 15 mm stattfindet und die quer zur Längsrichtung des Roving-Bündels gemessene Breite der Naht 7 mm beträgt. Es ist dabei von Vorteil, wenn die Zickzack-Naht beabstandet vom in Längsrichtung des NCF verlaufenden Rand des Rovings ist, bspw. $\frac{1}{10}$ der Breite. Dabei ist es von Vorteil, wenn die Breite des ganzen Roving-Bündels ungefähr 10 mm beträgt +/- 2 mm.

Das Steifigkeits- / Gewichtsverhältnis ist dann besonders vorteilhaft, wenn der erste Subpreform und/oder der dritte Subpreform 4-, 5- oder 6-lagig aufgewickelt / aufgebaut ist und/oder der zweite Subpreform 5-, 6- oder 7-lagig aufgewickelt / aufgebaut ist. Auch noch mehr Lagen, wie 8, 9, 10, etc. sind möglich.

Aktuell gibt es nur drei Subpreforms. In Zukunft können jedoch noch weiter dazu kommen (Decklagen, lokale Aufdickungen, usw.). Die drei Subpreforms können durch weitere "Untersubpreformen" ergänzt werden. Es geht dabei konkret um zusätzliche Sichtlagen auch wegen der Optik, wegen des Thermalschutzes, und um lokale zusätzliche Verstärkungen zu erreichen.

Die drei Subpreforms können durch gleichzeitiges Mitaufwickeln von Rovings oder Bändern zusätzlich ergänzt werden. So entstehen Bereiche in Umfangsrichtung, die zusätzlich auch Fasern in Umfangsrichtung aufweisen.

Man kann zusätzliche 0°-Rovings in Umfangsrichtung auch auf die zweite Subreform in den Bereichen der Verbindung aufwickeln und den Bereich dadurch weiter Verstärken.

Wenn jener an die Roving-Bündel angrenzende Teil der NCF-Lagen des ersten Subpreforms und/oder des dritten Subpreforms vollständig oder teilweise, aber alle Lagen umfassende Bereich, über einen vorzugsweise thermisch aktivierten Binder unverrutschbar aneinander befestigt sind. Auf diese Weise kann der ohne Binder versehene Bereich einerseits des Roving-Bündels später einfach umgekrempelt / umgestülpt / umgefaltet / umgeschalgen werden, wohingegen der mit dem Binder verbundene Bereich andererseits des Roving-Bündels hart und unverrutschbar bleibt. Dies ist der Fertigung zuträglich. Die Präzision des Felgenkörpers wird besonders gut und hoch.

Wenn der besagte Bereich, auf dem der Binder aufgebracht ist, (nur) auf der Außenseite der Fahrzeugfelge, d. h. radial außerhalb des jeweiligen Verbindungshohlraums vorhanden ist, so ist das Umkrempeln / Umschlagen des restlichen Teils des die Fahrzeugfelge formmäßig bestimmenden Felgenkörpers, beginnend im Bereich des eingearbeiteten Roving-Bündels, selbst durch Handkraft einfach möglich. Es sei darauf verwiesen, dass das Umkrempeln auch als Umstülpen, Umfalten oder Umschlagen bezeichnet werden kann.

Eine vorteilhafte Ausführungsform ist auch dadurch gekennzeichnet, dass der zweite Subpreform am ersten Subpreform und/oder am dritten Subpreform (auch) mittels einer den jeweiligen Verbindungshohlraum durchdringenden (3D-)Naht befestigt ist. Der Zusammenhalt der Einzelteile wird dadurch erhöht.

Eine weitere Ausführungsform betrifft eine solche Felgenkörperkonfiguration, bei der das Roving-Bündel zwischen $\frac{5}{12}$ bis $\frac{6}{13}$ +/- 10 % der Breite des NCF von einem 12 13 Längsrand des NCF beabstandet ist. Auf diese Weise wird das Roving-Bündel außermittig positioniert, was ein Mehr an Material beim Umkrempeln / Umschlagen / Umfalten / Umstülpen Rechnung trägt.

Auch ist es von Vorteil, wenn das Roving-Bündel mit dem Abschnitt des NCF, an dem es befestigt ist, über mehrere Lagen hinweg, ein Felgenhorn zum Befestigen eines Reifens ausbildet. Dabei bieten sich Wickel- und Krempelverfahren an.

Insbesondere bietet es sich an, einen Teil des Felgenkörpers, einerseits des Roving-Bündels umzustülpen oder umzukrempeln um dies zu erreichen.

Wenn ein NCF-Abschnitt auf der Außenseite oder Innenseite der Felge im Bereich des Felgenhorns liegt oder ein Roving-Bündel dort auf der Innenseite oder Außenseite liegt, kann dieser Bereich zur späteren Einleitung der Kräfte des Reifens effizient genutzt werden.

Das Verfahren kann vorteilhafterweise auch dadurch weitergebildet werden, dass (je) ein Roving-Bündel auf dem NCF des ersten Subpreforms und/oder des dritten Subpreforms (jeweils) in Längsrichtung aufgenäht wird.

Wenn ein vorzugsweise im Endprodukt außenliegender und alle Lagen erfassender Abschnitt des NCF des ersten Subpreforms und/oder des dritten Subpreforms, angrenzend an das Roving-Bündel, mit einem thermischen Binder versehen wird, bspw. bestreut, bestrichen oder besprüht wird und (danach) ausgehärtet / fixiert wird, so lässt sich ein besonders präzises Bauteil erwirken.

Dabei ist es von Vorteil, wenn vor dem Aushärten / Fixieren des Binders der Bereich des Roving-Bündels und nur der unmittelbar angrenzende Bereich komprimiert und/oder gekühlt wird.

Ferner ist es von Vorteil, wenn nach dem Aktivieren des bspw. thermischen Binders der vom Roving-Bündel aus gesehen andere, binderfreie Teil des ersten Subpreforms und/oder des dritten Subpreforms nach innen umgekrempelt / umgestülpt wird, um einen in die Rotationsachse des Felgenkörpers umlaufenden Hohlraum / (vorderen und/oder hinteren) Verbindungshohlraum zwischen dem den Binder aufweisenden Teil und dem binderfreien Teil zu binden. Auf diese Weise wird ein Koppelungsbereich geschaffen, der für die Verbindung jeweils zweier Subpreforms genutzt werden kann.

Wenn nach dem Umkrempeln der Lagen des ersten Subpreforms und/oder des dritten Subpreforms, das zweite Subpreform in den jeweiligen Hohlraum / Verbindungshohlraum eingesetzt wird, so ist die Grundlage für einen kompakten, integralen, einstückigen Felgenkörper geschaffen.

Dabei ist es von Vorteil, wenn der erste Subpreform, der zweite Subpreform und der dritte Subpreform gleichzeitig mit Harz infiltriert werden und diese drei Bauteile gemeinsam ausgehärtet werden. Es bietet sich an, die drei Subpreforms mittels einer RTM-Injektion mit Harz zu beschicken. Eine Rolle bzw. zwei Rollen zum Andrücken werden eingesetzt, wobei zumindest eine Rolle kühlbar / gekühlt ist / wird. Grundsätzlich sind alle Bereiche des NCF mit thermischem Binder beschickbar. Dann ist es jedoch sinnvoll, nur einen Bereich einerseits des Roving-Bündels auszuhärten, d.h. einen Binder zu "aktivieren" (also bspw. aufzuheizen und/oder abzukühlen, damit er die Fasern miteinander verklebt) und erst nach dem Umkrempeln / Umstülpen / Umfalten und Umstürzen den anderen Bereich, andererseits des Roving-Bündels (also zeitlich versetzt) auszuhärten, d.h. zu aktivieren. Selbstverständlich ist es von Vorteil, wenn der Anfang und das Ende eines NCF in Umfangsrichtung eines Wickelkerns gesehen an derselben Stelle oder mit eventuell (kleiner) Überlappung vorhanden ist. Es lassen sich Pressstempel oder Presswalzen zum Aufbringen von Druck und Hitze vorzugsweise einerseits des Roving-Bündels einsetzen.

Alternativ ist es auch möglich wenigstens / nur eine Stahlrolle zum Anpressen und Abkühlen zu verwenden und zusätzlich eine Kunststoffrolle mit einer Nut zur Positionierung des Bereiches mit dem Aufgenähten Rovingbündel einzusetzen. Diese Vorrichtung lässt sich in eine Aufwickeleinheit integrieren.

Die Erfindung wird nachfolgend auch mit Hilfe einer Zeichnung erläutert, in der einerseits die Vorrichtung, also die Fahrzeugfelge näher beschrieben wird und andererseits das Herstellverfahren näher beschrieben wird.

Es zeigen:

Fig. 1 einen teilweise dargestellten Querschnitt durch eine Fahrzeugfelge aufweisend einen erfindungsgemäßen Felgenkörper aus Faserverbundmaterial mit angedeutetem darauf befestigtem Reifen,

Fig. 2 eine Vergrößerung des Bereichs II aus Fig. 1 mit im ersten Subpreform befestigten zweiten Subpreform,

Fig. 3 eine Vergrößerung des Bereichs III aus Fig. 2 durch den zweiten Subpreform,

Fig. 4    eine Draufsicht auf die NCF der ersten bis dritten Subpreforms, wobei auf das NCF des ersten und dritten Subpreforms jeweils ein Roving-Bündel aufgenäht ist,

Fig. 5    der Vorgang des Aufwickelns des ersten oder dritten Subpreforms mit dem NCF, auf dem das Roving-Bündel befestigt ist, zum Ausbilden von mehreren Lagen,

Fig. 6    einen Schnitt entlang der Linie VI durch den Aufbau aus Fig. 5 mit zwei Druckrollen, von denen eine zum Abführen von Wärme genutzt ist, welche zeitlich vorher auf einen vom Roving-Bündel aus gesehen einseitigen Bereich der Subpreform 1 oder Subpreform 3 aufgebracht wurde,

Fig. 7    eine schematische Darstellung der Ausgangsform des ersten Subpreforms oder zweiten Subpreforms zum Augenblick des nach innen Umkrempelns zum Schaffen des vorderen oder hinteren Verbindungshohlraums, wobei auch ein nach außen Umkrempeln ebenso möglich ist, und

Fig. 8    das Zusammenstecken der drei einzelnen Subpreforms.

Die Figuren sind lediglich schematischer Natur und dienen nur dem Verständnis der Erfindung. Die gleichen Elemente sind mit denselben Bezugszeichen versehen.

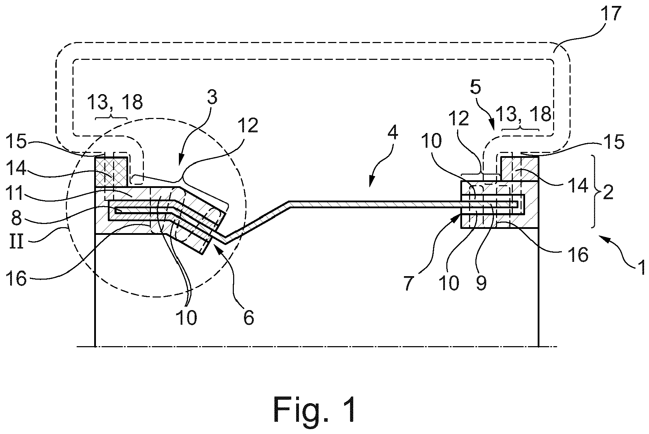

In Fig. 1 ist eine Fahrzeugfelge 1 angedeutet. Sie besitzt einen Felgenkörper 2. Der Felgenkörper 2 ist aus im Endzustand ausgehärtetem Faserverbundmaterial, aufweisend Verstärkungsfäden, bspw. Kohlefaser-, Glasfaser- und/oder Aramidfaserfäden, eingebettet in einer Harzmatrix, aufgebaut. Auch Mischungen der unterschiedlichen Fäden sind möglich. Der Felgenkörper 2 setzt sich aus einer Vielzahl von Einzelteilen zusammen, umfassend ein erstes Subpreform 3, ein zweites Subpreform 4 und ein drittes Subpreform 5.

Der erste Subpreform 3 und der dritte Subpreform 5 sind so umgestülpt / umgekrempelt / umgeschlagen, dass sich in dessen Inneren ein vorderer Verbindungshohlraum 6, respektive ein hinterer Verbindungshohlraum 7 bildet. Diese beiden Verbindungshohlräume 6 und 7 sind also Hohlräume, die durch das Material der entsprechenden ersten Subpreform 3 respektive dritten Subpreform 5 gebildet sind. Die beiden Verbindungshohlräume 6 und 7 weisen Enden des zweiten Subpreforms 4 auf, wobei diese Enden mit dem Bezugszeichen 8 und 9 versehen sind.

Zwischen dem Ende 8 des zweiten Subpreforms 4 und dem Material des ersten Subpreforms 3 respektive dem Ende 9 des zweiten Subpreforms 4 und dem Material des dritten Subpreforms 5 befindet sich Harz / ein Harzgemisch 10. Dieses Harz 10 kann / soll das gleiche oder sogar selbe Harz / Harzgemisch sein, das alle drei Sub-Preforms 3, 4 und 5 durchtränkt / durchdringt. Es kann jedoch auch davon abweichen. Insbesondere kann es ersetzt sein durch einen Binder 11, bspw. einen thermischen Binder, der in einem Binderbereich 12 vorhanden ist. Der Binderbereich 12 ist axial innerhalb eines Roving-Bündelbereichs 13 vorhanden. Genauer gesagt wird zur Herstellung der Preform und der Verbindung der Subpreformen ein Binderpulver verwendet. Das Harz kommt erst bei der Injektion der gesamten, schon zusammen gesetzten Preform bei der RTM Injektion dazu. Das Binderpulver löst sich dann während der Injektion im Harzgemisch auf.

Der Roving-Bündelbereich 13 ist jener Bereich des ersten Subpreforms 3 resp. des dritten Subpreforms 5, in dem pro Subpreform 3 oder 5 ein Roving-Bündel 14 eingearbeitet ist. Das Roving-Bündel 14 ist aus elf Rovings zusammengesetzt, die fünf oder zehn Umdrehungen pro Meter besitzen. Zum befestigenden Einarbeiten kann eine Naht 15 verwendet sein, wie sie strichpunktiert angedeutet ist.

Die Enden 8 und/oder 9 können am jeweiligen ersten Subpreform 3 oder dritten Subpreform 5 mit einer (3D-)Naht 16 zusätzlich oder alternativ zu dem in den Verbindungshohlräumen 6 oder 7 enthaltenem Harz eingesetzt sein. Ein später auf dem Felgenkörper 2 zu befestigender Reifen 17 ist strichliert angedeutet. Dabei greift der Reifen 17 im Bereich von Felgenhörnern 18 an, der durch den Roving-Bündelbereich 13 ausgebildet ist.

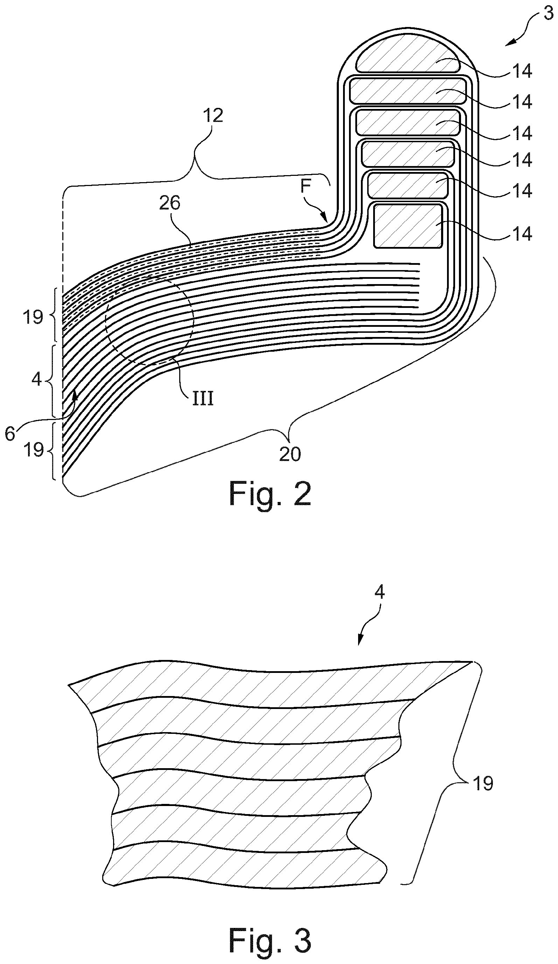

In Fig. 2 ist der erste Subpreform 3 näher dargestellt. Es wird offensichtlich, dass mehrere Lagen aus einem (einzigen) NCF-Material 19 mit (einem einzigen) aufgebrachtem Roving-Bündel 14 verwendet sind. Jene, bspw. als Zickzack-Naht ausgebildete Naht 15 ist aus Vereinfachungsgründen nicht dargestellt.

Das Eingreifen des zweiten Sub-Preforms 4 in den vorderen Verbindungshohlraum 6 unter Zwischenschaltung des Harzes / Harzgemisches 10 ist gut erkennbar.

Die Ende/Kanten des NCF 19 sind in einer besonderen Ausführngsform aber nicht umgeklappt, sondern liegen einfach an der gleichen Stelle übereinander oder mit einem Versatz. Das Zusammenstecken der drei Subpreformen 3, 4 und 5 kann gleichzeitig mit dem Umstülpen erfolgen. Wenn erst das Umstülpen erfolgt, kann man es nicht mehr zusammen stecken.

Es sind bspw. sechs Lagen ausgebildet, wobei letztlich ein ca. 9 m langes zusammenhängendes NCF-Materialstück 19, besitzend das aufgenähte Roving-Bündel 14, so mehrfach aufgewickelt, dass sich jene sechs Lagen ergeben. Auch fünf Lagen sind denkbar, sowie in Abhängigkeit von der zu erwartenden Belastung mehr oder weniger Lagen. Während auf der einen Seite des vorderen Verbindungshohlraums 6 der Binderbereich 12 vorhanden ist, ist auf der anderen Seite ein binderfreier Bereich 20 vorhanden. Dieser binderfreie Bereich 20 erstreckt sich letztlich bis zu dem Roving-Bündel 14.

Dass auch der zweite Subpreform 4 aus mehreren Lagen eines NCF-Materials 19 gebildet ist, ist der Fig. 3 zu entnehmen. Es sind dabei sieben Lagen aus einem 600 gr/m² Material mit ±45° Fäden eingesetzt.

Zwischen den Wickellagen sind Zusatzrovings 26 eingesetzt. Das gilt auch für den zweiten Subpreform 4 in einer weiteren Ausführungsform.

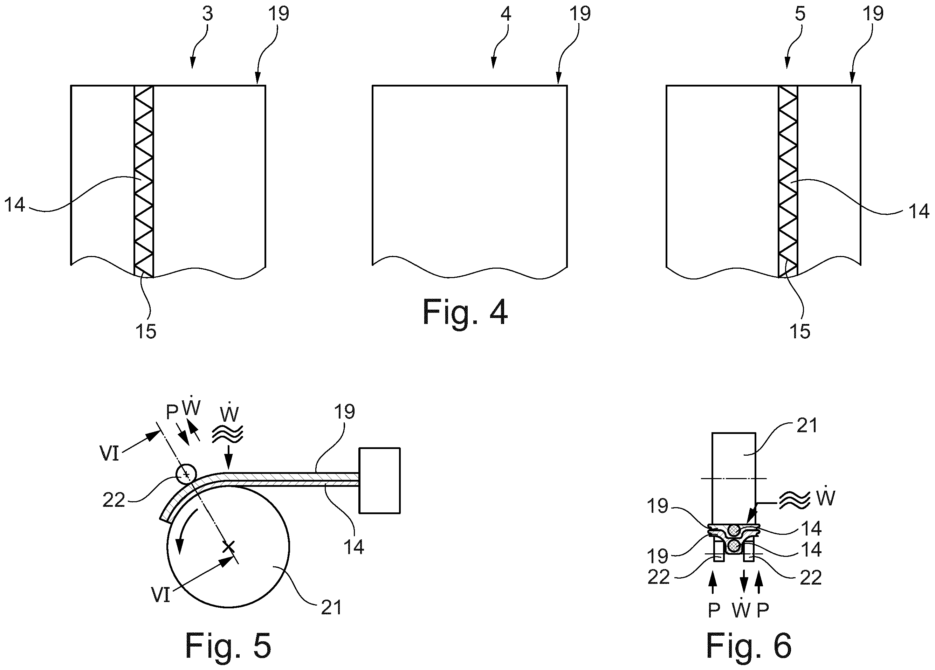

In Fig. 4 ist das Ausgangsmaterial nämlich das NCF-Material 19 für die erste Subpreform 3, die zweite Subpreform 4 und die dritte Subpreform 5 dargestellt. Der erste Subpreform 3 nutzt NCF-Material, das ca. doppelt so schwer pro Quadratmeter ist, als der dritte Subpreform 5. Beide setzen auf ein Biaxialgelege mit +/- 45°-Fäden. Der erste Subpreform 3 ist um ca. 8 % +/- 3 breiter als der dritte Subpreform 5. Die Länge der Abschnitte des NCF-Materials 19 sind gleich groß, bspw. 9 m. Bei einer Breite von 14 cm des Ausgangsmaterials des ersten Subpreforms 3 lassen sich geschickterweise je besagten fünf Lagen wickeln. Vor dem Wickeln ist jedoch auf das NCF-Material 19 der ersten Subpreform 3 und der dritten Subpreform 5 das jeweilige Roving-Bündel 14 mittels der (Zickzack-)Naht 15 aufgenäht.

Das Aufwickeln des NCF-Materials 19, bspw. besitzend das aufgenähte Roving-Bündel 14 ist in der Fig. 5 visualisiert. Es gibt dabei eine Wickelrolle 21, vorzugsweise aus Holz. Holz hat sich bewährt, da es ein nahezu optimales E-Modul zur Verfügung stellt. Dabei drücken zwei Rollen 22 das NCF-Material 19 und indirekt auch das Roving-Bündel 14 in Richtung der Wickelrolle 21.

Das Druckaufbringen (P) ist in der Fig. 6 genauso angedeutet, wobei dort erkennbar ist, dass die beiden Rollen 22 um die Breite des Roving-Bündels 14 voneinander beabstandet sind. Die Rollen 22 sind vorzugsweise aus Stahl gefertigt.

In Zusammenschau der Fign. 5 und 6 ist klar, dass an den Rollen 22 vorgelagerter Stelle Wärme zugeführt wird, das dann wenigstens durch die eine der beiden Rollen 22 danach wieder abgeführt wird (W). Das Aufbringen der Hitze findet über eine heat gun / einen Wärmestrom, bspw. mittels eines Föhns, eines Lasers, einer Infrarotleuchte oder eines Heißluftgebläses statt.

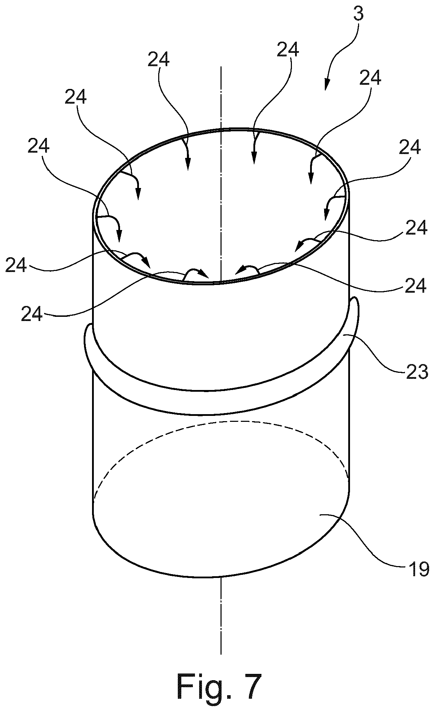

In Fig. 7 ist jener durch die eingearbeiteten Roving-Bündel 14 geschaffene verdickte Bund 23 an dem ersten Subpreform 3 angedeutet. Mit den Pfeilen 24 ist die Krempelrichtung angedeutet.

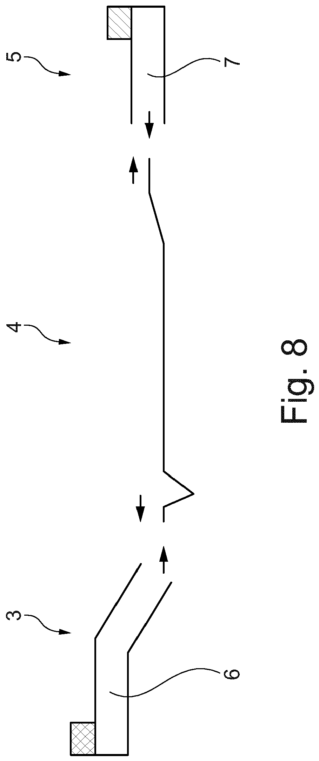

In Fig. 8 ist über die Pfeile 25 die Zusammensteckrichtung der drei Subpreforms 3, 4 und 5 visualisiert.Sind die drei Subpreforms 3, 4, 5 zusammengesteckt, werden diese mit Harz injiziert und danach unter Aufbringen von Hitze und Druck ausgehärtet.

Gegebenenfalls findet danach noch das Ankoppeln eines Radsterns aus einer Leichtmetalllegierung statt, um die fertige Fahrzeugfelge zu erhalten.

**Bezugszeichenliste**

| 1 | Fahrzeugfelge |
|---|---|
| 2 | Felgenkörper |
| 3 | erster Subpreform |
| 4 | zweiter Subpreform |
| 5 | dritter Subpreform |
| 6 | vorderer Verbindungshohlraum |
| 7 | hinterer Verbindungshohlraum |
| 8 | Ende des zweiten Subpreforms |
| 9 | Ende des zweiten Subpreforms |
| 10 | Harz / Harzgemisch |
| 11 | Binder |
| 12 | Binderbereich |
| 13 | Roving-Bündelbereich |
| 14 | Roving-Bündel |
| 15 | Naht |
| 16 | (3D-)Naht |
| 17 | Reifen |
| 18 | Felgenhorn |
| 19 | NCF-Material |
| 20 | binderfreier Bereich |
| 21 | Wickelrolle |
| 22 | Rolle |
| 23 | verdickter Bund |
| 24 | Pfeil / Krempelrichtung |
| 25 | Pfeil / Zusammensteckrichtung |
| 26 | Zusatzroving |

**Patentansprüche**

1. Fahrzeugfelge (1) mit einem Felgenkörper (2) aus Faserverbundmaterial, aufweisend ein erstes Subpreform (3) an einem ersten axialen Ende und ein drittes Subpreform (5) an dem gegenüberliegenden zweiten axialen Ende, wobei ein zweiter Subpreform (4) zwischen dem ersten Subpreform (3) und dem dritten Subpreform (5) angeordnet ist, wobei der zweite Subpreform (4) sowohl in einen durch den ersten Subpreform (3) ausgebildeten vorderen Verbindungshohlraum (6) eingreift als auch in einen durch den dritten Subpreform (5) ausgebildeten hinteren Verbindungshohlraum (7) eingreift, **dadurch gekennzeichnet, dass** der erste Subpreform (3) und der zweite Subpreform (4) und der dritte Subpreform (5) ein NCF-Material (19) aufweisen.

2. Fahrzeugfelge (1) nach Anspruch 1, **dadurch gekennzeichnet, dass** der zweite Subpreform (4) in den beiden Verbindungshohlräumen (6 und 7) an dem ersten Subpreform (3) und dem dritten Subpreform (5) befestigt ist.

3. Fahrzeugfelge (1) nach Anspruch 1 oder 2, **dadurch gekennzeichnet, dass** alle drei Subpreforms (3, 4, 5) durch dasselbe Harz / Harzgemisch (10) durchsetzt sind.

4. Fahrzeugfelge (1) nach einem der Ansprüche 1 bis 3, **dadurch gekennzeichnet, dass** das NCF-Material (19) ein monoaxiales / unidirektionales oder biaxiales oder multiaxiales Gelege ist.

5. Fahrzeugfelge (1) nach einem der Ansprüche 1 bis 4, **dadurch gekennzeichnet, dass** der erste Subpreform (3) und/oder der zweite Subpreform (4) und/oder der dritte Subpreform (5) mehrere Lagen aus NCF besitzt / besitzen.

6. Fahrzeugfelge (1) nach einem der Ansprüche 1 bis 5, **dadurch gekennzeichnet, dass** der erste Subpreform (3) und/oder der dritte Subpreform (5) ein NCF besitzt, auf dem ein Roving-Bündel (14) befestigt ist.

7. Fahrzeugfelge (1) nach Anspruch 6, **dadurch gekennzeichnet, dass** das Roving-Bündel (14) mehrere Rovings beinhaltet.

8. Fahrzeugfelge (1) nach Anspruch 6 oder 7, **dadurch gekennzeichnet, dass** das Roving-Bündel (14) auf dem NCF-Material (19) aufgenäht ist.

9. Verfahren zum Herstellen einer Fahrzeugfelge (1) mit einem Felgenkörper (2) aus Faserverbundmaterial, wobei jeweils ein kohlefaser-, glasfaser- und/oder aramidfaserumfassendes NCF-Material (19) zum Ausbilden einer ersten Subpreform (3) für ein erstes axiales Ende des Felgenkörpers (2) und einer dritten Subpreform (5) für ein gegenüberliegendes axiales zweites Ende des Felgenkörpers (2) mit jeweils einem Verbindungshohlraum (6, 7) geschaffen wird, und dass ein zweites Subpreform (4) aus einem gleichen oder ähnlichen NCF-Material (19) in die Verbindungshohlräume (6, 7) eingesetzt und dort befestigt wird.

Fig. 1

3

14

14

14

14

14

14

12

26

F

19

4

6

III

19

20

## Fig. 2

4

19

## Fig. 3

Fig. 4

Fig. 5

Fig. 6

Fig. 7

Fig. 8

Europäisches
Patentamt

European
Patent Office

Office européen
des brevets

## EUROPÄISCHER RECHERCHENBERICHT

**Nummer der Anmeldung**

**EP 21 19 8507**

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG** (IPC) |
| X<br>A | WO 2014/082115 A1 (CARBON REVOLUTION PTY LTD [AU]) 5. Juni 2014 (2014-06-05)<br>* Absätze [0009], [0013], [0018], [0020], [0021], [0023], [0024], [0026], [0029] – [0031], [4142]; Abbildungen * | 1-7<br>8,9 | INV.<br>B29C70/20<br>B29C70/22<br>B60B5/02<br>B29C70/30<br>B29C70/54<br>B29C70/48 |
| | ----- | | |
| A | DE 10 2013 223834 A1 (JOHNSON CONTROLS COMPONENTS GMBH & CO KG [DE]) 5. März 2015 (2015-03-05)<br>* Absätze [0040], [0041], [0045]; Abbildungen 3,5 * | 9 | ADD.<br>B29L31/32 |
| | ----- | | |
| | | | **RECHERCHIERTE SACHGEBIETE** (IPC) |
| | | | B29C<br>B29L<br>B60B |

Der vorliegende Recherchenbericht wurde für alle Patentansprüche erstellt

| Recherchenort<br>**Den Haag** | Abschlußdatum der Recherche<br>**3. Februar 2022** | Prüfer<br>**Bibollet-Ruche, D** |
|---|---|---|

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 21 19 8507

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2022

| Im Recherchenbericht angeführtes Patentdokument | Datum der Veröffentlichung | Mitglied(er) der Patentfamilie | Datum der Veröffentlichung |
|---|---|---|---|
| WO 2014082115 A1 | 05-06-2014 | KEINE | |
| DE 102013223834 A1 | 05-03-2015 | DE 102013223834 A1 | 05-03-2015 |
| | | EP 3041707 A1 | 13-07-2016 |
| | | US 2016200231 A1 | 14-07-2016 |
| | | WO 2015032869 A1 | 12-03-2015 |

EPO FORM P0461

Für nähere Einzelheiten zu diesem Anhang : siehe Amtsblatt des Europäischen Patentamts, Nr.12/82